# FASCICULE DE BREVET EUROPEEN

(11) **EP 2 645 647 B1**
(45) Date de publication et mention de la délivrance du brevet: **30.11.2016**
(21) Numéro de dépôt: 13160617.0
(22) Date de dépôt: 22.03.2013
(51) Int. Cl.: H04L 12/807, H04L 12/835, H04L 29/06

(54) **PROCÉDÉ D'OPTIMISATION DU DÉBIT DESCENDANT D'UNE LIGNE D'ACCÈS ASYMÉTRIQUE, DISPOSITIF, PRODUIT PROGRAMME D'ORDINATEUR ET SUPPORT DE STOCKAGE CORRESPONDANTS.**
VERFAHREN ZUR OPTIMIERUNG DES DOWNSTREAMS EINER ASYMMETRISCHEN ZUGANGSLINIE, ENTSPRECHENDE VORRICHTUNG, ENTSPRECHENDES COMPUTERPROGRAMMPRODUKT UND ENTSPRECHENDER DATENTRÄGER ZUR SPEICHERUNG
METHOD FOR OPTIMISING THE DOWNSTREAM RATE OF AN ASYMMETRIC SUBSCRIBER LINE, CORRESPONDING DEVICE, COMPUTER PROGRAM PRODUCT AND STORAGE MEDIUM

(30) Priorité: 29.03.2012 FR 1252851
(43) Date de publication de la demande: 02.10.2013
(73) Titulaire: Orange, 75015 Paris (FR)
(72) Inventeur: Le Norment, Philippe, 22220 TREDARZEC (FR); Rabin, Olivier, 22450 LANGOAT (FR)
(74) Mandataire: Vidon Brevets & Stratégie

(56) Documents cités:
- WO-A1-2008/076022
- WO-A2-2007/074343
- US-A- 5 442 637
- SHRUTI SANADHYA ET AL: "Adaptive flow control for TCP on mobile phones", INFOCOM, 2011 PROCEEDINGS IEEE, IEEE, 10 avril 2011 (2011-04-10), pages 2912-2920, XP031953516, DOI: 10.1109/INFCOM.2011.5935130 ISBN: 978-1-4244-9919-9
- DAIGO TANAKA ET AL: "Pulsed ACK: Improving Robustness of TCP for Asymmetric Bandwidth", 2007 IEEE PACIFIC RIM CONFERENCE ON COMMUNICATIONS, COMPUTERS AND SIGNAL PROCESSING - 22-24 AUG. 2007 ,VICTORIA, BC, CANADA, IEEE, PISCATAWAY, NJ, USA, 1 août 2007 (2007-08-01), pages 125-128, XP031136705, ISBN: 978-1-4244-1189-4
- PHANSE K S ET AL: "Characterization of performance of TCP/IP over PPP and ATM over asymmetric links", COMPUTER COMMUNICATIONS AND NETWORKS, 2000. PROCEEDINGS. NINTH INTERNA TIONAL CONFERENCE ON LAS VEGAS, NV, USA 16-18 OCT. 2000, PISCATAWAY, NJ, USA,IEEE, US, 16 octobre 2000 (2000-10-16), pages 334-339, XP010524528, DOI: 10.1109/ICCCN.2000.885511 ISBN: 978-0-7803-6494-3

## Description

### 1. DOMAINE DE L'INVENTION

Le domaine de l'invention est celui des transmissions de données d'un serveur vers un terminal client, via des lignes d'accès asymétriques, comme par exemple des lignes ADSL.

Plus précisément, l'invention concerne de telles transmissions utilisant le protocole HTTP et le protocole TCP (« *Transmission Control Protocol »* en anglais) au niveau transport.

L'invention a de nombreuses applications, telles que par exemple le téléchargement de données audiovisuelles (« *downloading* » en anglais) ou la diffusion de données audiovisuelles en temps réel (« *streaming* » en anglais).

Plus généralement, elle peut s'appliquer dans tous les cas où la ligne de transmission présente une dissymétrie dans ses débits (débit descendant supérieur au débit montant).

### 2. ARRIÈRE-PLAN TECHNOLOGIQUE

On s'attache plus particulièrement dans la suite de ce document à décrire la problématique existant dans le domaine de la transmission de données via une ligne d'accès asymétrique et mettant en oeuvre les protocoles HTTP et TCP, à laquelle ont été confrontés les inventeurs de la présente demande de brevet. L'invention ne se limite bien sûr pas à ce domaine particulier d'application, mais présente un intérêt pour toute technique de transmission de données devant faire face à une problématique proche ou similaire.

Le principe de ces lignes d'accès asymétriques, telles que les lignes ADSL, est basé sur un débit descendant supérieur au débit montant (encore noté remontant), pénalisant la transmission de données lorsque le protocole utilisé est HTTP.

En effet, le fonctionnement du protocole HTTP, conjugué à la faible capacité en bande passante de la voie remontante, a pour effet de limiter le débit descendant à un débit parfois nettement inférieur au potentiel de la ligne d'accès.

Cette limitation sur le débit descendant offert pour un service de visionnage en temps réel de Vidéo à la Demande peut engendrer des effets délétères allant de l'augmentation considérable du temps de téléchargement pour un service de téléchargement jusqu'à la perte du service.

Ceci est dû au fait que le protocole HTTP repose sur le protocole de transport TCP, qui assure une certaine robustesse vis à vis des pertes de paquets en mettant en oeuvre l'émission de paquets d'acquittement pour les paquets correctement reçus. Les paquets n'ayant pas été acquittés, et donc considérés comme perdus, peuvent alors être réémis par le serveur. Ainsi, en fonctionnement établi de transmission de données, il y a coexistence d'un trafic descendant (les données elles-mêmes) et d'un trafic remontant, faible (les acquittements).

Les données transmises par le serveur via le trafic descendant sont d'abord stockées, dans l'équipement client, dans un tampon de réception de la pile TCP, puis transmises à l'application qui les traite. Cette transmission est effectuée soit quand le tampon de la pile TCP est plein, soit quand l'application en a besoin. L'application stocke ensuite les données dans un tampon, avant de les utiliser, ou de les transmettre à une autre application. Les données sont donc transférées d'un tampon de la pile TCP à un tampon de l'application.

La norme RFC 793 préconise l'émission d'un paquet d'acquittement pour un paquet de données et surtout impose l'émission, lorsque le tampon de la pile TCP est vidé, d'un paquet d'acquittement relatif aux paquets non encore acquittés stockés dans ce tampon. Ainsi, à chaque accès aux données stockées dans le tampon de la pile TCP par l'application, un paquet d'acquittement est émis. La norme RFC 1122 autorise l'émission d'un paquet d'acquittement pour deux paquets de données en respectant un temps maximal entre deux émissions consécutives.

Le document de brevet WO 2007/074343 propose (*Section A « Processing received Data* ») une technique pour contrôler le traitement de données reçues, en vérifiant si, au bout d'un intervalle de temps prédéterminé, le traitement des données (au niveau protocole de transport) a commencé, de façon à ce que les données nécessaires à une application particulière soient disponibles pour cette application.

Il existe donc un besoin pour trouver une solution permettant de contourner cette restriction de débit descendant, quelque soit le système d'exploitation utilisé dans l'équipement client, et tout en :
- respectant les normes relatives aux protocoles utilisés, par exemple HTTP et TCP;
- ne modifiant pas les architectures existantes des services et des réseaux ;
- assurant la compatibilité avec les piles de protocole mises en oeuvre dans les terminaux client (par exemple les boîtiers décodeurs, ou STB (« *Set-Top-Box »* en anglais)).

### 3. EXPOSÉ DE L'INVENTION

L'invention propose une solution nouvelle qui ne présente pas l'ensemble de ces inconvénients de l'art antérieur, sous la forme d'un procédé d'optimisation du débit descendant d'une ligne d'accès asymétrique selon la revendication 1.

Ainsi, l'invention repose sur une approche nouvelle et inventive de l'optimisation du débit descendant d'une ligne d'accès asymétrique, permettant d'augmenter ce débit descendant d'une telle ligne tout en respectant les contraintes liées aux protocoles utilisés, par exemple les protocoles HTTP et TCP, et les contraintes de débit du lien montant.

L'optimisation du débit descendant est ainsi obtenue grâce à l'émission différée du paquet d'acquittement émis lorsque le tampon de réception des données en provenance du serveur (dans l'équipement client, par exemple un boîtier décodeur ou STB) est vidé, par exemple sur requête d'une application (dans l'équipement client) ayant besoin des données stockées dans ce tampon de réception (soit pour les retransmettre à une autre application utilisant les données, soit pour les utiliser elle-même).

Ainsi, cette temporisation de l'émission de certains paquets d'acquittement permet de moins « encombrer » le lien montant et donc d'améliorer le débit descendant. En effet, la fréquence d'émission des paquets d'acquittement via le lien montant étant fortement diminuée, le débit du lien descendant est optimisé.

Selon une caractéristique particulière de l'invention, les données sont transmises entre ledit au moins un serveur et ledit au moins un équipement client selon le protocole HTTP, et le protocole TCP est mis en oeuvre dans ledit au moins un équipement client, ledit au moins un premier tampon étant un tampon de la pile TCP.

Selon un mode de réalisation particulier de l'invention, la temporisation est mise en oeuvre au moyen d'une variable représentative d'un délai de scrutation dudit au moins un premier tampon par ladite application.

Ainsi, selon ce mode de réalisation particulier de l'invention, la temporisation est mise en oeuvre par l'intermédiaire d'une variable représentative d'un délai de scrutation du premier tampon (par exemple le tampon de la pile TCP), c'est-à-dire une variable permettant de retarder le moment où les données du premier tampon sont transmises au tampon de l'application les ayant requises.

De cette manière, l'application va chercher moins souvent des données dans ce premier tampon, mais elle récupère potentiellement plus de données à chaque fois, le premier tampon ayant eu le temps de plus se remplir le temps du délai de scrutation.

Selon un autre mode de réalisation particulier, la temporisation est mise en oeuvre en fonction d'un seuil de remplissage dudit au moins un premier tampon de réception, ce qui permet de tenir compte du débit effectif de la ligne d'accès asymétrique.

Selon plusieurs variantes de l'invention, la temporisation est mise en oeuvre avant ou après la requête de transmission de données vers ledit au moins un deuxième tampon.

Ainsi, selon une première variante, le délai de scrutation est implémenté avant la requête de transmission des données, retardant ainsi l'émission de cette requête, et retardant donc le transfert des données du premier tampon de réception (par exemple le tampon de la pile TCP) vers le tampon de l'application.

Selon une autre variante, le délai de scrutation est implémenté après une requête de transmission des données, mettant en quelque sorte l'application en sommeil.

L'une ou l'autre de ces solutions peuvent être mises en oeuvre au sein de l'application elle-même, en insérant une ou plusieurs lignes de commande dans le programme de l'application, ou bien « en dehors » de l'application, par l'insertion d'une ou plusieurs lignes de commande, avant ou après l'appel à l'application.

Selon une caractéristique particulière de l'invention, le procédé comprend, préalablement à la temporisation, une mise à jour de la variable représentative d'un délai de scrutation en fonction d'au moins un paramètre appartenant au groupe comprenant :
- une caractéristique de la ligne d'accès asymétrique ;
- la taille dudit au moins un premier tampon ;
- une caractéristique de l'application.

Selon un mode de réalisation particulier de l'invention, la variable de délai de scrutation est mise à jour en fonction d'une ou plusieurs caractéristiques de la ligne d'accès asymétrique elle-même, par exemple les contraintes de débit des liens montant et descendant.

La variable peut également être mise à jour en fonction de la taille du premier tampon de réception (par exemple un tampon de la pile TCP). En effet, le délai de scrutation doit tenir compte de la taille de ce tampon, de façon à ce que la transmission des données stockées dans ce tampon vers l'application soit optimale.

Enfin, la variable peut également être mise à jour en fonction de certaines caractéristiques de l'application, et notamment de la taille de son propre tampon, dans lequel les données transmises du premier tampon de réception sont d'abord stockées, avant d'être « réellement » utilisées par l'application, ou transférées à une autre application utilisant les données.

Cette mise à jour peut être aussi bien réalisée régulièrement, de manière automatique au moyen d'un programme informatique, que manuellement.

Selon un aspect particulier de l'invention, le procédé comprend en outre une étape de modification de la taille dudit au moins un premier tampon et/ou dudit au moins un deuxième tampon.

Ainsi, une bonne adéquation des tailles de ces tampons, de réception comme le tampon TCP ou de l'application, permet d'obtenir des performances optimales en termes d'amélioration du débit du lien descendant.

En effet, plus la taille du premier tampon de réception (par exemple de la pile TCP) est importante, permettant ainsi de stocker plus de données, et plus le délai de scrutation pourra être fixé à une valeur élevée, permettant ainsi de diminuer encore la fréquence d'émission des paquets d'acquittement.

Par ailleurs, la taille du tampon de l'application peut également être modifiée en conséquence, de façon à permettre le transfert d'un plus grand nombre de données en provenance du premier tampon de réception.

L'invention concerne également un dispositif d'optimisation du débit descendant d'une ligne d'accès asymétrique selon la revendication 7.

Avantageusement, le dispositif d'optimisation du débit descendant d'une ligne d'accès asymétrique comprend des moyens de mise en oeuvre des étapes qu'il effectue dans le procédé d'optimisation du débit descendant d'une ligne d'accès asymétrique tel que décrit précédemment, dans l'un quelconque de ses différents modes de réalisation.

L'invention concerne également un produit programme d'ordinateur, comprenant des instructions de code de programme pour la mise en oeuvre du procédé précité (dans l'un quelconque de ses différents modes de réalisation), lorsque ledit programme est exécuté sur un ordinateur.

Selon un autre mode de réalisation, il est proposé un support/médium de stockage, lisible par ordinateur, et non transitoire, stockant un programme d'ordinateur comprenant un jeu d'instructions exécutables par un ordinateur ou un processeur pour mettre en oeuvre le procédé précité (dans l'un quelconque de ses différents modes de réalisation).

### 4. LISTE DES FIGURES

D'autres caractéristiques et avantages de l'invention apparaîtront à la lecture de la description suivante, donnée à titre d'exemple indicatif et non limitatif, et des dessins annexés, dans lesquels :
- la figure 1 présente un exemple d'un système dans lequel le procédé selon un mode de réalisation particulier de l'invention peut être mis en oeuvre ;
- la figure 2 présente les principales étapes du procédé selon un mode de réalisation de l'invention ; et
- la figure 3 présente la structure d'un dispositif selon un mode de réalisation particulier de l'invention.

### 5. DESCRIPTION DÉTAILLÉE

### 5.1 Principe général

Le principe général de l'invention repose sur la temporisation de la transmission de données d'un premier tampon de réception des données vers un deuxième tampon, permettant de retarder l'émission d'un paquet d'acquittement consécutive à cette transmission de données du premier tampon au deuxième, pour améliorer le débit descendant d'une ligne d'accès asymétrique.

En effet, cette temporisation permet de réduire le nombre de paquets d'acquittement émis via le lien montant de la ligne d'accès asymétrique, optimisant ainsi le débit du lien descendant.

Dans la suite du présent document, on désigne les liens (montant et descendant) de la ligne d'accès asymétrique indifféremment par les termes « lien » ou « voie ».

Par ailleurs, sur toutes les figures du présent document, les éléments et étapes identiques sont désignés par une même référence numérique.

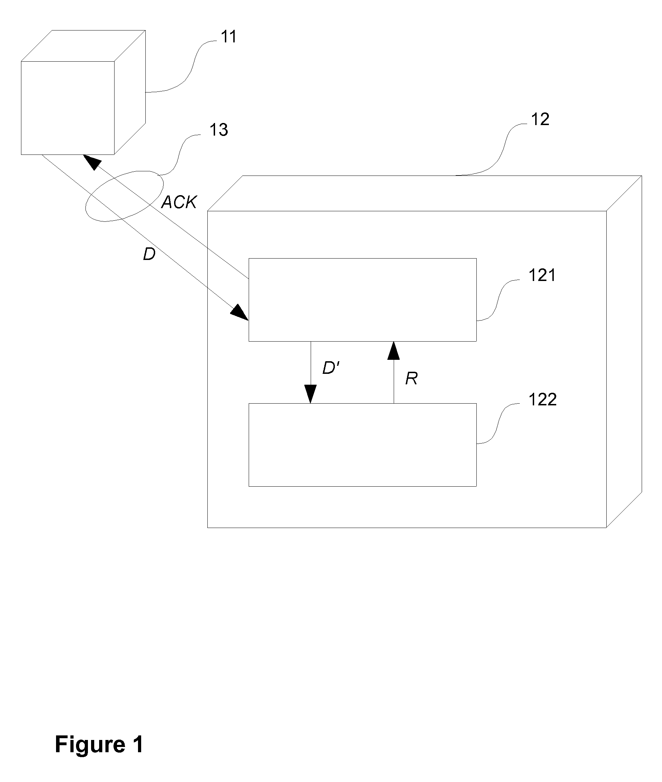

La figure 1 illustre un exemple de système dans lequel l'invention peut être mise en oeuvre, selon un mode de réalisation particulier.

Ainsi, on considère un serveur de données 11 transmettant des données *D*, via une ligne d'accès asymétrique 13, à un équipement client 12.

Au sein de cet équipement client, un premier tampon 121 stocke les données *D* reçues en provenance du serveur, via le lien descendant de la ligne 13. Un deuxième tampon 122 reçoit des données *D'* (identiques à tout ou partie des données *D*) stockées dans le premier tampon 121, en réponse à une requête *R*. Ce deuxième tampon peut être celui de l'application utilisant les données, ou bien celui d'une application intermédiaire retransmettant (avec ou sans mise en forme) les données vers une application finale utilisant les données.

Lorsque les données *D'* sont transmises du premier tampon 121 vers le deuxième tampon 122, le premier tampon 121 émet un paquet d'acquittement *ACK*, via le lien montant de la ligne 13, indiquant que toutes les données stockées dans le premier tampon 121 ont été correctement reçues.

Le principe général de l'invention est donc basé sur la temporisation de la transmission des données *D'* du premier tampon 121 vers le deuxième tampon 122, de façon à moins encombrer le lien montant avec des paquets d'acquittement, optimisant ainsi le débit du lien descendant.

### 5.2 Description d'un mode de réalisation particulier de l'invention

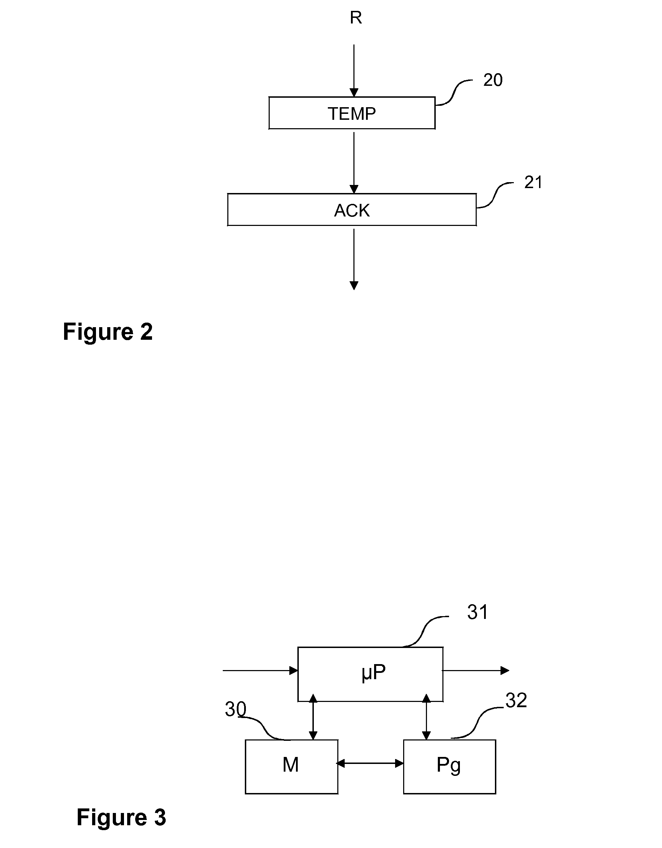

On présente maintenant, en relation avec la figure 2, les principale étapes du procédé selon un mode de réalisation particulier de l'invention, par exemple mis en oeuvre dans un système tel qu'illustré en figure 1.

Ainsi, une première étape 20 de temporisation est mise en oeuvre, de façon à retarder la transmission des données du premier tampon de réception, où sont stockées les données en provenance du serveur (par exemple téléchargées via le lien descendant de la ligne d'accès asymétrique), vers le deuxième tampon de l'application. La transmission de ces données d'un tampon vers l'autre fait suite à une requête de l'application, lorsque celle-ci a besoin des données, soit pour les utiliser elle-même, soit pour les retransmettre à une autre application.

Cette étape de temporisation est suivie par une étape 21 d'émission d'un paquet d'acquittement, via le lien montant de la ligne d'accès asymétrique, par le premier tampon de réception, lorsque les données stockées dans le premier tampon de réception sont effectivement transmises vers le deuxième tampon, autrement dit lorsque le premier tampon est vidé.

Ainsi, selon ce mode de réalisation de l'invention, l'émission du paquet d'acquittement (étape 21) est différée par rapport à un fonctionnement normal, selon lequel la requête émise par l'application est immédiatement suivie par un transfert des données du premier vers le deuxième tampon.

Le premier tampon de réception peut ainsi stocker un plus grand nombre de données avant d'être vidé vers le deuxième tampon, et émettre moins fréquemment un paquet d'acquittement via le lien montant, permettant une amélioration du débit descendant de la ligne d'accès asymétrique.

Selon ce mode de réalisation de l'invention, l'étape de temporisation est mise en oeuvre, au sein de l'équipement client, au moyen d'une variable correspondant à un délai de scrutation du premier tampon de réception.

Ainsi, selon une première variante de réalisation, cette variable représente un délai pendant lequel les données du premier tampon de réception ne sont pas transmises au deuxième tampon, alors qu'une requête pour ce faire a été émise par l'application.

Par exemple, la variable peut être définie dans le programme de l'application, via une ligne de commande retardant l'émission de la requête vers le premier tampon de réception. Une fois le délai écoulé, la requête est effectivement transmise au premier tampon, lequel transmet en retour les données requises vers le deuxième tampon. Une fois vidé, le premier tampon émet alors un paquet d'acquittement vers le serveur, via le lien montant de la ligne d'accès asymétrique.

Selon un autre exemple, la variable peut être définie dans un programme indépendant, s'interfaçant avec le programme de l'application, permettant la rétention de la requête émise par l'application, pendant la durée du délai de scrutation représenté par la variable. Une fois ce délai écoulé, le programme indépendant transfère la requête au premier tampon de réception, lequel transmet en retour les données requises vers le deuxième tampon. Une fois vidé, le premier tampon émet alors un paquet d'acquittement vers le serveur, via le lien montant de la ligne d'accès asymétrique.

Selon une deuxième variante, cette variable représente un délai retardant l'émission, par l'application, de la requête et donc retardant la transmission des données du premier tampon de réception vers le deuxième tampon.

Par exemple, la variable de délai de scrutation est définie dans le programme de l'application, via une ligne de commande mettant en quelque sorte l'application en sommeil avant l'émission de la requête de données. Ainsi, une fois le délai écoulé, la requête est émise vers le premier tampon de réception, lequel transmet en retour les données requises vers le deuxième tampon. Une fois vidé, le premier tampon émet alors un paquet d'acquittement vers le serveur, via le lien montant de la ligne d'accès asymétrique.

Selon un autre exemple, la variable peut être définie dans un programme indépendant, s'interfaçant avec le programme de l'application, et mettant en quelque sorte l'application en sommeil, après une requête de données, retardant ainsi l'émission d'une requête ultérieure de données, et donc l'émission d'un paquet d'acquittement émis par le premier tampon lorsqu'il est vidé.

Quelque soit la variante mise en oeuvre, l'invention prévoit, selon un mode de réalisation, que cette variable représentative d'un délai de scrutation soit mise à jour en fonction d'un ou plusieurs paramètres, tels que par exemple :
- une caractéristique de la ligne d'accès asymétrique ;
- la taille du premier tampon de réception ;
- une caractéristique de l'application.

Ainsi, le délai de scrutation peut être fixé en tenant compte de certaines caractéristiques de la ligne d'accès asymétrique, comme par exemple les débits des liens descendant et montant, ou d'une information de charge de cette ligne. Ce délai de scrutation peut également être fixé en fonction de la latence de cette ligne d'accès asymétrique, c'est-à-dire du temps de propagation des signaux sur cette ligne.

Le délai de scrutation peut également être fixé en tenant compte de la taille du premier tampon de réception. En effet, plus la taille de ce tampon est importante, et plus le délai de scrutation peut être long.

De même, le délai de scrutation peut être fixé en fonction de caractéristiques de l'application, comme par exemple la taille de son tampon (le deuxième tampon). En effet, ce tampon de l'application doit pouvoir recevoir, en provenance du premier tampon de réception, toutes les données stockées dans ce dernier.

Ainsi, l'invention, selon l'une ou l'autre de ces mises en oeuvre particulières, permet d'optimiser encore le débit descendant de la ligne d'accès asymétrique (allant jusqu'à atteindre la capacité maximale de la ligne) en fixant le délai de temporisation en tenant compte de paramètres de l'environnement, tels que des caractéristiques de la ligne, des tampons utilisés et/ou de l'application requérant les données.

Selon un autre mode de réalisation, l'étape de temporisation est mise en oeuvre, au sein de l'équipement client, en fonction d'un seuil de remplissage du premier tampon de réception.

En particulier, l'étape de temporisation est mise en oeuvre tant que le nombre de paquets de données stockés dans ce tampon de réception reste inférieur à ce seuil de remplissage. Une fois ce seuil atteint, cette étape de temporisation s'achève et l'application récupère alors les paquets de données de ce premier tampon de réception dans le deuxième tampon afin de les traiter.

Ce seuil de remplissage peut être de l'ordre de 12288 octets, par exemple, et est avantageusement fixé en fonction des caractéristiques de la ligne d'accès asymétrique.

Le retard dans l'émission de paquets d'acquittement est alors géré au moyen d'un contrôle sur le remplissage du premier tampon de réception et dépend également de la vitesse de remplissage de ce premier tampon, donc du débit effectif de la ligne d'accès asymétrique.

Ce mode de réalisation peut être combiné avec le mode de réalisation précédent, dans lequel l'étape de temporisation est mise en oeuvre au moyen d'une variable correspondant à un délai de scrutation du premier tampon de réception, afin de cumuler ces deux critères.

Dans ce cas, la transmission des paquets de données du premier tampon de réception vers le deuxième tampon de l'application est réalisé à l'expiration du délai de scrutation, sauf si le seuil de remplissage est atteint au niveau du premier tampon de réception avant l'expiration de ce délai, auquel cas la transmission des paquets au deuxième tampon a alors lieu dès l'atteinte de ce seuil.

Par ailleurs, selon un aspect particulier de l'invention, et toujours pour optimiser encore le débit descendant, la taille des tampons utilisés peut être modifiée, lorsque cela est possible.

Ainsi, la taille du tampon de l'application peut être modifiée pour être égale à celle du premier tampon de réception, si ça n'est pas le cas par défaut.

De même, si la taille du premier tampon de réception est paramétrable, il est judicieux de la modifier de façon à pouvoir fixer le délai de scrutation à une valeur permettant l'obtention de performances optimales en termes de débit descendant.

Ces variantes de réalisation sont présentées à titre d'exemples indicatifs et non limitatifs et il est clair que de nombreux autres modes de réalisation de l'invention peuvent être envisagés.

### 5.3 Description d'une mise en oeuvre particulière de l'invention

Selon une mise en oeuvre particulière de l'invention, on considère que la ligne d'accès asymétrique est une ligne ADSL, via laquelle les données sont transmises du serveur à l'équipement client selon le protocole HTTP. On considère également que le protocole TCP est mis en oeuvre dans l'équipement client, le premier tampon étant alors un tampon de la pile TCP. Le deuxième tampon peut être un tampon d'une application utilisant ensuite directement les données, ou bien d'une application retransmettant les données, avec ou sans mise en forme/modification, à une autre application.

Dans un tel mode de réalisation, si l'on considère une ligne ADSL de capacité maximale de 6 Mb/s, alors un fonctionnement actuel d'une telle ligne, selon l'art antérieur et donc sans mise en oeuvre de l'invention, ne permet d'obtenir qu'un débit descendant de 3 Mb/s.

En fixant le délai de scrutation à une valeur aux alentours de 10 ms, alors l'invention permet d'obtenir la pleine capacité de la ligne ADSL pour le débit descendant, à savoir 6 Mb/s dans ce cas. Une telle valeur de délai de scrutation permet également d'obtenir la pleine capacité d'une ligne ADSL de 8 ou 10 Mb/s.

### 5.4 Structure simplifiée d'un dispositif selon un mode de réalisation particulier de l'invention

La figure 3 présente la structure simplifiée d'un dispositif d'optimisation du débit descendant d'une ligne d'accès asymétrique mettant en oeuvre le procédé d'optimisation du débit descendant d'une ligne d'accès asymétrique selon l'invention (par exemple le mode de réalisation particulier décrit ci-dessus en relation avec la figure 2). Ce dispositif comprend une mémoire RAM 30, une unité de traitement 31, équipée par exemple d'un processeur, et pilotée par un programme d'ordinateur stocké dans une mémoire ROM 32. A l'initialisation, les instructions de code du programme d'ordinateur sont par exemple chargées dans la mémoire RAM 30 avant d'être exécutées par le processeur de l'unité de traitement 31. L'unité de traitement 31 reçoit par exemple en entrée des données en provenance d'un serveur, ainsi qu'une information représentative d'un délai de scrutation. Le processeur de l'unité de traitement 31 traite ces données et cette information et génère en sortie un paquet d'acquittement, selon les instructions du programme 32.

Cette figure 3 illustre seulement une manière particulière, parmi plusieurs possibles, de réaliser les différents modes de réalisation détaillés ci-dessus, en relation avec la figure 2.

Dans le cas où l'invention est implantée sur une machine de calcul reprogrammable, le programme correspondant (c'est-à-dire la séquence d'instructions) pourra être stocké dans un médium de stockage amovible (tel que par exemple une disquette, un CD-ROM ou un DVD-ROM) ou non, ce médium de stockage étant lisible partiellement ou totalement par un ordinateur ou un processeur.

## Revendications

1. Procédé d'optimisation du débit descendant d'une ligne d'accès asymétrique (13), utilisée pour transmettre des données entre au moins un serveur (11) et au moins un équipement client (12) comprenant au moins un premier tampon de réception (121) recevant des données en provenance dudit serveur, et au moins un deuxième tampon (122) d'une application dans ledit équipement client, recevant lesdites données en provenance dudit au moins un premier tampon de réception à réception d'une requête émise par ladite application, ledit procédé comprenant :
• une temporisation (20) de la transmission des données présentes dans ledit au moins un premier tampon de réception vers ledit au moins un deuxième tampon, ladite temporisation étant mise en oeuvre, au moyen d'une variable représentative d'un délai de scrutation dudit au moins un premier tampon, par ladite application, via une ligne de commande, ou par un programme indépendant s'interfaçant avec ladite application :
∘ par rétention de ladite requête émise par ladite application, ou
∘ par un retard de l'émission de ladite requête de ladite application, mettant en quelque sorte ladite application en sommeil ;
• une émission, par ledit équipement client, d'un paquet d'acquittement vers le serveur lorsque lesdites données présentes dans ledit au moins un premier tampon ont été transmises audit au moins un deuxième tampon, ladite émission étant différée (21) par rapport à un fonctionnement normal, selon lequel ladite requête émise par l'application est immédiatement suivie par un transfert des données du premier vers le deuxième tampon.

2. Procédé selon la revendication 1, **caractérisé en ce que** les données sont transmises entre ledit au moins un serveur et ledit au moins un équipement client selon le protocole HTTP, et **en ce que** le protocole TCP est mis en oeuvre dans ledit au moins un équipement client, ledit au moins un premier tampon étant un tampon de la pile TCP.

3. Procédé selon la revendication 2, **caractérisé en ce que** ledit procédé comprend, préalablement à ladite temporisation, une mise à jour de ladite variable représentative d'un délai de scrutation en fonction d'au moins un paramètre appartenant au groupe comprenant :
• une caractéristique de ladite ligne d'accès asymétrique ;
• la taille dudit au moins un premier tampon ;
• une caractéristique de ladite application.

4. Procédé selon la revendication 1, **caractérisé en ce que** ladite temporisation est mise en oeuvre en fonction d'un seuil de remplissage dudit au moins un premier tampon de réception.

5. Procédé selon la revendication 1, dans lequel la transmission de données dudit au moins un premier tampon de réception vers ledit au moins un deuxième tampon est mise oeuvre sur requête de ladite application, **caractérisé en ce que** ladite temporisation est mise en oeuvre avant ou après ladite requête de transmission de données vers ledit au moins un deuxième tampon.

6. Procédé selon la revendication 1, **caractérisé en ce qu'**il comprend en outre une étape de modification de la taille dudit au moins un premier tampon et/ou dudit au moins un deuxième tampon.

7. Dispositif d'optimisation du débit descendant d'une ligne d'accès asymétrique, utilisée pour transmettre des données entre au moins un serveur et au moins un équipement client comprenant au moins un premier tampon de réception recevant des données en provenance dudit serveur, et au moins un deuxième tampon d'une application dans ledit équipement client, recevant lesdites données en provenance dudit au moins un premier tampon de réception, à réception d'une requête émise par ladite application ,
le dispositif comprenant :
• des moyens de temporisation de la transmission des données présentes dans ledit au moins un premier tampon de réception vers ledit au moins un deuxième tampon, ladite temporisation étant mise en oeuvre, au moyen d'une variable représentative d'un délai de scrutation dudit au moins un premier tampon, par ladite application, via une ligne de commande, ou par un programme indépendant s'interfaçant avec ladite application :
∘ par rétention de ladite requête émise par ladite application, ou
∘ par un retard de l'émission de ladite requête de ladite application, mettant en quelque sorte ladite application en sommeil ;
• et des moyens d'émission, par ledit équipement client, d'un paquet d'acquittement vers le serveur lorsque lesdites données présentes dans ledit au moins un premier tampon ont été transmises audit au moins un deuxième tampon, ladite émission étant différée par rapport à un fonctionnement normal, selon lequel ladite requête émise par l'application est immédiatement suivie par un transfert des données du premier vers le deuxième tampon.

8. Produit programme d'ordinateur, comprenant des instructions de code de programme pour la mise en oeuvre du procédé selon au moins une des revendications 1 à 6, lorsque ledit programme est exécuté sur un ordinateur.

9. Support de stockage, lisible par ordinateur, stockant un programme d'ordinateur comprenant un jeu d'instructions exécutables par un ordinateur ou un processeur pour mettre en oeuvre le procédé selon au moins une des revendications 1 à 6.

## Patentansprüche

1. Verfahren zur Optimierung des Downstreams einer asymmetrischen Zugangslinie (13), die verwendet wird, um Daten zwischen mindestens einem Server (11) und mindestens einer Kundenausrüstung (12) zu übertragen, umfassend mindestens einen ersten Aufnahmepuffer (121), der Daten aufnimmt, die vom Server kommen, und mindestens einen zweiten Puffer (122) einer Anwendung in der Kundenausrüstung, der die Daten aufnimmt, die von dem mindestens einen ersten Aufnahmepuffer bei Empfang einer von der Anwendung entsandten Anfrage kommen, wobei das Verfahren umfasst:
• eine Verzögerung (20) der Übertragung der Daten, die in dem mindestens einen ersten Aufnahmepuffer vorhanden sind, zu dem mindestens einen zweiten Puffer, wobei die Verzögerung mit Hilfe einer Variablen eingesetzt wird, die für eine Durchsuchungsfrist des mindestens einen ersten Puffers durch die Anwendung über eine Steuerlinie oder durch ein unabhängiges Programm, das mit der Anwendung verknüpft ist, repräsentativ ist:
∘ durch Zurückhalten der von der Anwendung entsandten Anfrage, oder
∘ durch eine Verzögerung der Entsendung der Anfrage der Anwendung, die gewissermaßen die Anwendung ruhig stellt;
• durch die Kundenausrüstung eine Entsendung eines Quittierpakets zu dem Server, wenn die in dem mindestens einen Puffer vorhandenen Daten an mindestens einen zweiten Puffer übertragen wurden, wobei die Entsendung in Bezug zu einem Normalbetrieb verschoben ist (21), bei dem auf die von der Anwendung entsandte Anfrage unmittelbar ein Transfer der Daten vom ersten zum zweiten Puffer folgt.

2. Verfahren nach Anspruch 1, **dadurch gekennzeichnet, dass** die Daten zwischen dem mindestens einen Server und der mindestens einen Kundenausrüstung nach dem HTTP-Protokoll übertragen werden, und dass das TCP-Protokoll in der mindestens einen Kundenausrüstung eingesetzt wird, wobei der mindestens eine erste Puffer ein Puffer des TCP-Stapels ist.

3. Verfahren nach Anspruch 2, **dadurch gekennzeichnet, dass** das Verfahren vor der Verzögerung eine Aktualisierung der Variablen, die für eine Untersuchungsfrist repräsentativ ist, in Abhängigkeit von mindestens einem Parameter umfasst, der der Gruppe angehört, umfassend:
• ein Merkmal der asymmetrischen Zugangslinie;
• die Größe des mindestens einen ersten Puffers;
• ein Merkmal der Anwendung.

4. Verfahren nach Anspruch 1, **dadurch gekennzeichnet, dass** die Verzögerung in Abhängigkeit von einer Füllgrenze des mindestens einen ersten Aufnahmepuffers eingesetzt wird.

5. Verfahren nach Anspruch 1, bei dem die Datenübertragung von dem mindestens einen ersten Aufnahmepuffer zu dem mindestens einen zweiten Puffer auf Anfrage der Anwendung eingesetzt wird, **dadurch gekennzeichnet, dass** die Verzögerung vor oder nach der Datenübertragungsanfrage zu dem mindestens einen zweiten Puffer eingesetzt wird.

6. Verfahren nach Anspruch 1, **dadurch gekennzeichnet, dass** es ferner einen Schritt der Änderung der Größe des mindestens einen ersten Puffers und/oder des mindestens einen zweiten Puffers umfasst.

7. Vorrichtung zur Optimierung des Downstreams einer asymmetrischen Zugangslinie, die verwendet wird, um Daten zwischen mindestens einem Server und mindestens einer Kundenausrüstung zu übertragen, umfassend mindestens einen ersten Aufnahmepuffer, der Daten aufnimmt, die vom Server kommen, und mindestens einen zweiten Puffer einer Anwendung in der Kundenausrüstung, der die Daten aufnimmt, die von dem mindestens einen ersten Aufnahmepuffer bei Empfang einer von der Anwendung entsandten Anfrage kommen, wobei die Vorrichtung umfasst:
• Mittel zur Verzögerung der Übertragung der Daten, die in dem mindestens einen Aufnahmepuffer vorhanden sind, zu dem mindestens einen zweiten Puffer, wobei die Verzögerung mit Hilfe einer Variablen eingesetzt wird, die für eine Durchsuchungsfrist des mindestens einen ersten Puffers durch die Anwendung über eine Steuerlinie oder durch ein unabhängiges Programm, das mit der Anwendung verknüpft ist, repräsentativ ist:
∘ durch Zurückhalten der von der Anwendung entsandten Anfrage, oder
∘ durch eine Verzögerung der Entsendung der Anfrage der Anwendung, die gewissermaßen die Anwendung ruhig stellt;
• Mittel zum Entsenden durch die Kundenausrüstung eines Quittierpakets zu dem Server, wenn die in dem mindestens einen ersten Puffer vorhandenen Daten an mindestens einen zweiten Puffer übertragen wurden, wobei die Entsendung in Bezug zu einem Normalbetrieb verschoben ist, bei dem auf die von der Anwendung entsandte Anfrage unmittelbar ein Transfer der Daten vom ersten zum zweiten Puffer folgt.

8. Computerprogrammprodukt, umfassend Programmcodebefehle für den Einsatz des Verfahrens nach mindestens einem der Ansprüche 1 bis 6, wenn das Programm auf einem Computer ausgeführt wird.

9. Speicherträger, der von einem Computer lesbar ist und der ein Computerprogramm speichert, umfassend einen Satz von Befehlen, die von einem Computer oder einem Prozessor ausführbar sind, um das Verfahren nach mindestens einem der Ansprüche 1 bis 6 einzusetzen.

## Claims

1. Method for optimizing the downstream rate of an asymmetric access line (13), used to transmit data between at least one server (11) and at least one customer equipment item (12) comprising at least one first reception buffer (121) receiving data from said server, and at least one second buffer (122) of an application in said customer equipment item, receiving said data from said at least one first reception buffer on reception of a request sent by said application, said method comprising:
• a time delay (20) for the transmission of the data present in said at least one first reception buffer to said at least one second buffer, said time delay being implemented, by means of a variable representative of a scanning delay of said at least one first buffer, by said application, via a command line, or by an independent program interfacing with said application:
∘ by retention of said request sent by said application, or
∘ by a delay in the sending of said request from said application, as it were putting said application to sleep;
• a sending, by said customer equipment item, of an acknowledgement packet to the server when said data present in said at least one first buffer have been transmitted to said at least one second buffer, said sending being deferred (21) relative to normal operation, whereby said request sent by the application is immediately followed by a transfer of the data from the first buffer to the second buffer.

2. Method according to Claim 1, **characterized in that** the data are transmitted between said at least one server and said at least one customer equipment item according to the HTTP protocol, and **in that** the TCP protocol is implemented in said at least one customer equipment item, said at least one first buffer being a buffer of the TCP stack.

3. Method according to Claim 2, **characterized in that** said method comprises, prior to said time delay, an updating of said variable representative of a scanning delay as a function of at least one parameter belonging to the group comprising:
• a characteristic of said asymmetric access line;
• the size of said at least one first buffer;
• a characteristic of said application.

4. Method according to Claim 1, **characterized in that** said time delay is implemented as a function of a filling threshold of said at least one first reception buffer.

5. Method according to Claim 1, in which the transmission of data from said at least one first reception buffer to said at least one second buffer is implemented on request from said application, **characterized in that** said time delay is implemented before or after said request for transmission of data to said at least one second buffer.

6. Method according to Claim 1, **characterized in that** it further comprises a step of modification of the size of said at least one first buffer and/or of said at least one second buffer.

7. Device for optimizing the downstream rate of an asymmetric access line, used to transmit data between at least one server and at least one customer equipment item comprising at least one first reception buffer receiving data from said server, and at least one second buffer of an application in said customer equipment item, receiving said data from said at least one first reception buffer on reception of a request sent by said application,
the device comprising:
• time delay means for the transmission of the data present in said at least one first reception buffer to said at least one second buffer, said time delay being implemented, by means of a variable representative of a scanning delay of said at least one first buffer, by said application, via a command line, or by an independent programme interfacing with said application:
° by retention of said request sent by said application, or
° by a delay in the sending of said request from said application, as it were putting said application to sleep;
• and means for sending, by said customer equipment item, of an acknowledgement packet to the server when said data present in said at least one first buffer have been transmitted to said at least one second buffer, said sending being deferred relative to normal operation, whereby said request sent by the application is immediately followed by a transfer of the data from the first buffer to the second buffer.

8. Computer program product, comprising program code instructions for the implementation of the method according to at least one of Claims 1 to 6, when said program is run on a computer.

9. Computer-readable storage medium, storing a computer program comprising a set of instructions executable by a computer or a processor to implement the method according to at least one of Claims 1 to 6.
